# EUROPÄISCHE PATENTSCHRIFT

(11) **EP 2 388 499 B1**
(45) Veröffentlichungstag und Bekanntmachung des Hinweises auf die Patenterteilung: **26.09.2018**
(21) Anmeldenummer: 11001556.7
(22) Anmeldetag: 25.02.2011
(51) Int. Cl.: F16K 17/08, F16K 39/02, F16K 17/04, B60T 17/04

(54) **Überströmventil und Drucklufteinrichtung für Kraftfahrzeuge**
Overflow valve and compressed air device for motor vehicles
Soupape de décharge de pression et dispositif à air comprimé pour véhicules automobiles

(30) Priorität: 18.05.2010 DE 102010020880
(43) Veröffentlichungstag der Anmeldung: 23.11.2011
(73) Patentinhaber: WABCO GmbH, 30453 Hannover (DE)
(72) Erfinder: Diekmeyer, Heinrich, 30890 Barsinghausen (DE); Lippelt, Frank-Dietmar, 30890 Barsinghausen (DE); Reimann, Dennis, 30177 Hannover (DE); Sack, Martin, 31535 Neustadt (DE)

(56) Entgegenhaltungen:
- WO-A1-98/08150
- WO-A1-2011/045318
- DE-A1- 2 604 167
- DE-A1- 19 545 532
- DE-U1- 9 407 952
- FR-A- 1 390 295
- FR-A- 1 491 463
- FR-A7- 2 264 462
- JP-A- 2001 289 342
- NL-A- 6 700 667
- US-A- 2 872 221
- US-A1- 2003 102 031

## Beschreibung

Die Erfindung betrifft ein Überströmventil für Drucklufteinrichtungen gemäß dem Gattungsbegriff des Patentanspruchs 1 und eine Drucklufteinrichtung für Kraftfahrzeuge gemäß dem Gattungsbegriff des Patentanspruchs 11.

In Drucklufteinrichtungen für Kraftfahrzeuge wird Druckluft, die üblicherweise ein Kompressor erzeugt, über eine Druckleitung einem Speicher zugeführt. Aus dem Speicher wird eine Verbrauchereinheit gespeist, beispielweise eine Luftfederanlage oder eine Druckluftbremsanlage des Kraftfahrzeugs. In der Druckleitung ist ein Überströmventil angeordnet, welches bei hinreichend großem Luftdruck auf seiner Einlassseite öffnet, so dass die Druckluft über den Ventilauslass dem Speicher zuströmen kann.

Aus DE-OS 2 318 744 ist ein Überströmventil bekannt, zwischen dessen Einlass und Auslass ein als Membran ausgebildetes Ventilglied angeordnet ist. Die Ventilmembran liegt in Schließstellung des Überströmventils auf einem Ventilsitz auf, der durch einen umlaufenden Rand einer Bohrung gebildet ist, die in einem Einlass und Auslass in dem Ventilgehäuse trennenden Gehäusewandabschnitt ausgebildet ist. Die Ventilmembran ist zwischen zwei Gehäuseteilen eingespannt. Die Ventilmembran wirkt gegen die Rückstellkraft eines längs beweglichen Ventilkolbens, welcher bei dem bekannten Überströmventil in der Zylinderkammer eines Gehäuseoberteils aufgenommen ist. In der Zylinderkammer ist eine Ventilfeder angeordnet, die sich einerseits an der Innenseite des Kolbenbodens und andererseits am Zylindergehäuse abstützt. In der Umgebung der den Ventilsitz ausbildenden Bohrung ist eine ringförmige Anströmkammer ausgebildet, welche mit dem Einlass des Überströmventils verbunden ist. Die Ventilmembran ist auf diese Weise unter der Wirkung des Drucks im Einlass über eine erste Wirkfläche in der Anströmkammer und der Wirkung des Drucks auf die Membran auf die dem Auslass zugeordnete zweite Wirkfläche in der Bohrung von dem Ventilsitz abhebbar.

Aus der DE 9407952 U1 ist ein Druckhalteventil bekannt. Ferner ist aus der DE 2604167 A1 ein Drucksteuerventil bekannt.

Ein derartiges Überströmventil in Membranbauweise offenbart auch DE 10 2005 019 478 B3, welche ein dem Überströmventil zugeordnetes Magnetventil vorschlägt, das in Abhängigkeit vom Stillstand des Kraftfahrzeuges und bei ausgeschalteter Zündung das Überströmventil überbrückt.

Die DE 102 20 789 B4 offenbart ein Überströmventil in Membranbauweise, welches eine über ein Magnetventil beaufschlagbare dritte Wirkfläche aufweist, so dass das Überströmventil auch unterhalb seines Öffnungsdrucks willkürlich, d.h. bei Bedarf oder zur Erreichung einer besonderen Funktion, geöffnet werden kann, so dass Druckluft zu dem Vorratsbehälter strömen kann. Die dritte Wirkfläche ist bei dem bekannten Überströmventil entweder direkt über das Magnetventil beaufschlagbar auf der dem Anströmraum zugekehrten Seite der Ventilmembran angeordnet oder über das Magnetventil indirekt beaufschlagbar auf der dem Anströmraum abgekehrten Seite der Ventilmembran angeordnet. Die Ventilmembran weist bei der bekannten Anordnung auf ihrer dem Anströmraum zugekehrten Seite eine erste anströmseitig dauernd beaufschlagte Wirkfläche, eine zweite abströmseitig dauernd beaufschlagte Wirkfläche und eine dritte, über das Magnetventil beaufschlagte Wirkfläche auf. Die erste und die dritte, vom Magnetventil schaltbare, Wirkfläche werden von dem Druck im Einlass beaufschlagt. Bei Erreichen des Öffnungsdrucks des Überströmventils werden die erste und die zweite Wirkfläche miteinander verbunden, so dass der Durchgang des Überströmventils geöffnet ist. In durchgängigem Schaltzustand des Überströmventils wird auch die zweite Wirkfläche vom Einlassdruck beaufschlagt.

Abhängig von dem auf der Abströmseite wirkenden Druck öffnen die bekannten Überströmventile im Einsatz oft vorzeitig, d.h. bevor der Druck im Einlass des Überströmventils den vorgesehenen Öffnungsdruck erreicht. Zudem liegen der Schließdruck und der Öffnungsdruck des bekannten Überströmventiles häufig weit auseinander.

Das frühzeitige Öffnen ist jedoch in vielen Anwendungsfällen des Überströmventils in Drucklufteinrichtungen für Kraftfahrzeuge unerwünscht. So ist es oftmals wünschenswert, wenn der Auffüllvorgang der Druckluftanlage möglichst rasch erfolgt, was durch ein möglichst spätes Öffnen des Überströmventils und der damit einhergehenden Druckerhöhung durch den laufenden Kompressor gefördert wird. Viele Anwendungen erfordern daher ein möglichst präzises Öffnen und Schließen des Überströmventils bei Erreichen vorgebbarer, auch dicht beieinander liegender bzw. gleichgroßer, Druckwerte, um die Drucklufteinrichtung optimal betreiben zu können. Oft wird auch -insbesondere bei Lastkraftwagen- eine bestimmte Reihenfolge der Auffüllvorgänge verschiedener Verbraucherkreise verlangt. Die Reihenfolge kann je nach Restdrücken in den Behältern (z.B. nach dem Abstellen des Fahrzeugs über Nacht) variieren. Dabei kommt es immer wieder dazu, dass Nebenverbraucherkreise mit niedriger Priorität wie beispielsweise eine elektronisch geregelte Luftfederung (ECAS) vor den Bremskreisen (hohe Priorität) befüllt werden.

Der vorliegenden Erfindung liegt die Aufgabe zugrunde, ein Überströmventil zu schaffen, welches bei Erreichen vorgebbarer, auch dicht beieinander liegender bzw. gleichgroßer, Druckwerte präzise öffnet oder schließt und bei Drucklufteinrichtungen eine möglichst rasche Druckluftauffüllung gewährleistet.

Diese Aufgabe wird erfindungsgemäß durch ein Überströmventil mit den Merkmalen des Patentanspruchs 1 gelöst.

Der Erfindung liegt die Erkenntnis zugrunde, dass beim Wiederbefüllen der Drucklufteinrichtung der Öffnungsdruck von dem Luftdruck beeinflusst wird, der von der Auslassseite her auf das Ventilglied wirkt. Bei hinreichend hohem Druck auf der Auslassseite öffnet das Überströmventil der herkömmlichen Bauart frühzeitig. Diese negativen Erscheinungen beruhen bei bekannten Überströmventilen auf dem Umstand, dass in geschlossenem Ventilzustand der Druck im Einlassbereich lediglich über die erste Wirkfläche auf das Ventilglied wirkt, während nach dem Abheben des Ventilglieds vom Ventilsitz die Wirkfläche sofort und sprungartig vergrößert wird. Dieser Flächensprung bewirkt eine schlagartig ansteigende Öffnungskraft, welche letztlich auch zum Schließen des Ventils aufgebracht werden muss. Der Flächensprung, d.h. die schlagartige Vergrößerung der Wirkfläche beim Öffnen des Ventils, ist reduziert, wenn erfindungsgemäß auf der dem Ventilkolben zugewandten Seite des Ventilglieds ein mit dem Auslass fluidisch kommunizierender Druckausgleichsraum vorgesehen ist, in welchem der Luftdruck über eine Ausgleichswirkfläche am Ventilkolben unmittelbar auf den Ventilkolben wirkt. In geschlossenem Zustand des Überströmventils herrscht in dem Druckausgleichsraum der gleiche Druck wie der auf das Ventilglied von der Auslassseite wirkende Druck. Es wird dann eine Kraft generiert, welche der Kraft entgegensteht, die über die dem Auslass zugeordnete zweite Wirkfläche erzeugt wird. Der Einfluss des auslassseitig auf das Ventilglied herrschenden Drucks auf den Öffnungsdruck ist somit um die über dem Druckausgleichsraum erzeugte Ausgleichskraft reduziert, so dass der tatsächliche Öffnungsdruck erheblich näher am vorgesehenen Öffnungsdruck des Überströmventils liegt als bei bekannten Überströmventilen. Der Flächensprung wird entsprechend der Größe der Ausgleichsfläche reduziert. Beim Schließen des Ventils unterstützt die durch den Druckausgleichsraum am Kolben erzeugte Druckkraft den Schließvorgang und zwar proportional zu der Kraft, die durch den Arbeitsdruck auf der Auslassseite entsteht, da der Druck im Druckausgleichsraum gleich dem Arbeitsdruck auf der Auslassseite des Überströmventils ist.

Durch die Reduzierung bzw. Ausschaltung des Einflusses des Arbeitsdrucks auf der Auslassseite auf das Ventilglied kann das erfindungsgemäße Überströmventil rechtzeitig und präzise öffnen und schließen. Dadurch kann auch eine gewünschte Reihenfolge der Auffüllvorgänge verschiedener Verbraucherkreise zuverlässig eingehalten werden, da das Überströmventil unabhängig von etwaigen Restdrücken in den Systembehältern der Verbraucherkreise, also rückwirkungsfrei, öffnet und schließt. Das rückwirkungsfreie Überströmventil wird zur Einstellung der Auffüllreihenfolge vor dem Behälter des zuletzt zu befüllenden Verbraucherkreis angeschlossen. Das rückwirkungsfreie Überströmventil hält dadurch den Zugang zum Behälter unabhängig von einem Restdruck in dem Behälter geschlossen, bis die vorrangigen Auffüllvorgänge abgeschlossen sind.

Der Öffnungsdruck des Überströmventils ist völlig unabhängig vom Arbeitsdruck, wenn die Ausgleichswirkfläche gleich groß ist wie diejenige der ersten Wirkfläche oder der zweiten Wirkfläche, welche durch den Ventilsitz bestimmt ist. Die durch den Ventilsitz bestimmte Wirkfläche ist dabei diejenige Wirkfläche, welche innerhalb des Ventilsitzes auf der dem Ventilsitz zugewandten Seite des Ventilglieds begrenzt ist. Die Druckkraft, die über die Ausgleichswirkfläche erzeugt wird, ist dann gleich groß wie die entgegengesetzt wirkende Druckkraft, die am Ventilsitz auf das Ventilglied wirkt.

Eine kompakte Bauweise des Überströmventils und der Einsatz einfacher Bauteile ist gegeben, wenn der Ventilkolben in einem Zylindergehäuse angeordnet ist und zur Aufbringung der Rückstellkraft von einer Ventilfeder beaufschlagt ist, welche sich an einer in das Zylindergehäuse eingeschraubten Stellschraube oder Stellmutter abstützt. Mittels der Stellschraube ist die Federkraft und damit der Öffnungsdruck des Überströmventils einstellbar.

Nach der Erfindung ist das Überströmventil in Membranbauweise mit einer flexiblen Ventilmembran als Ventilglied ausgebildet, wobei der Ventilkolben an der Ventilmembran auf dem Ventilsitz abgewandten Seite anliegt und der Druckausgleichsraum im Inneren des Ventilkolbens ausgebildet ist. Die Ventilmembran besteht vorteilhaft aus einem Elastomer. Über eine Druckausgleichsbohrung und eine Öffnung in der Ventilmembran kommuniziert der Druckausgleichraum mit einer dem Auslass zugeordneten Ventilkammer. Der Druckausgleich sorgt dafür, dass sowohl im Druckausgleichsraum als auch an der dem Ventilsitz zugeordneten Wirkfläche der gleiche Druck herrscht, so dass bei gleich großen Wirkflächen sich die resultierenden Kräfte gegenseitig aufheben. Zweckmäßig bildet eine Wand der Ventilkammer den Ventilsitz aus und trennt die Abströmkammer von einer dem Einlass des Überströmventils zugeordneten Anströmkammer, so dass kurze Strömungswege gegeben sind. Der Ventilsitz definiert genau die Wirkfläche, welche in gleicher Größe als Ausgleichswirkfläche am Ventilkolben auszugestalten ist. Reicht der Ventilkolben radial über den Ventilsitz hinaus, so ist eine größere Sicherheit der Kraftübertragung gegeben.

Nach der Erfindung ist an der Stellschraube ein in den Druckausgleichsraum einragender Kolben angeordnet. Der Durchmesser des Kolbens bzw. die Wirkfläche einer an ihm wirkenden Dichtung gegenüber der Wand des Druckausgleichsraums definiert die Ausgleichswirkfläche.

Das erfindungsgemäße Überströmventil kann als Ventil mit begrenzter Rückströmung ausgebildet sein, so dass bei Abfall des Arbeitsdrucks in den Druckbehältern des Verbrauchers ein teilweises Rückströmen der Druckluft bis zum Erreichen des Schließdrucks des Überströmventils erfolgen kann. Das Überströmventil kann auch vorteilhaft in ein Schutzventil der Drucklufteinrichtung integriert sein, so dass die Zahl der Bauteile der Einrichtung und der erforderliche Bauraum reduziert sind.

Ausführungsbeispiele der Erfindung sind nachstehend anhand der Zeichnungen näher erläutert. Es zeigen:
- Fig. 1: Eine geschnittene Ansicht eines Überströmventils in Membranbauweise
- Fig. 2: Eine geschnittene Ansicht eines nicht erfindungsgemäßen Überströmventils in Tellerbauweise

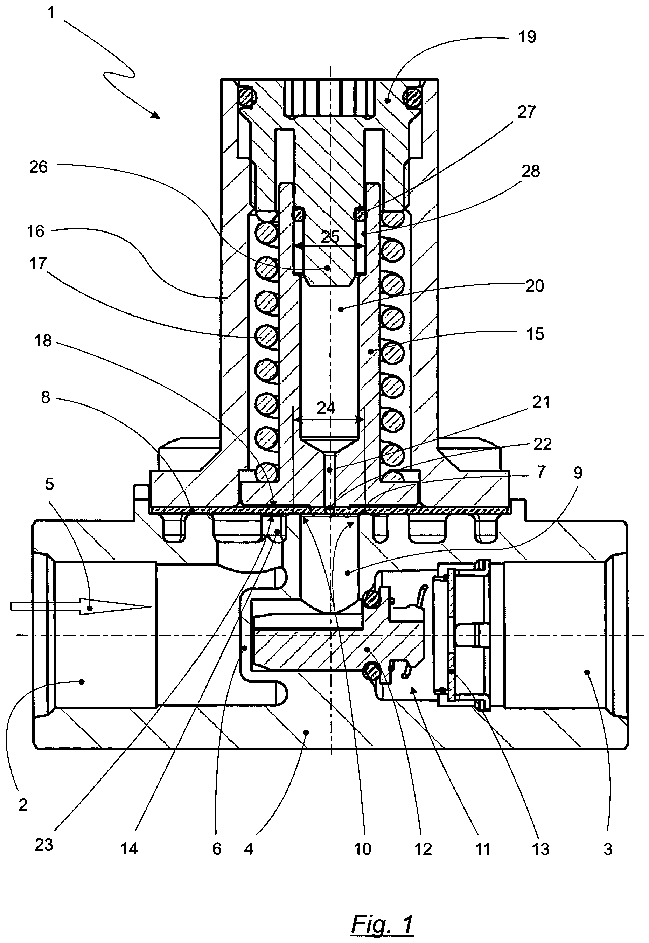

In Fig. 1 ist ein Überströmventil 1 zum Einbau in Drucklufteinrichtungen von Kraftfahrzeugen dargestellt. Das Überströmventil 1 umfasst einen Einlass 2 und einen Auslass 3, welche in einem Ventilgehäuse 4 hinsichtlich der Anströmrichtung 5 der Druckluft und der Abströmrichtung im Auslass 3 koaxial hintereinander liegen. Der direkte Durchtritt vom Einlass 2 zum Auslass 3 ist durch eine das Ventilgehäuse 4 durchsetzende Trennwand 6 versperrt. Ein Übertritt der Druckluft vom Einlass 2 zum Auslass 3 ist nur über einen Ventilsitz 7 des Überströmventils 1 möglich, der in der hier gezeigten geschlossenen Stellung des Überströmventils von einer Ventilmembran 8 versperrt ist. Die Ventilmembran 8 besteht aus einem flexiblen Elastomer. Die Trennwand 6 bildet eine im Ausführungsbeispiel zylindrische Abströmkammer 9 aus, deren umlaufender Rand 10 den Ventilsitz 7 bildet. Die Abströmkammer 9 ist mit dem Auslass 3 verbunden. Im gezeigten Ausführungsbeispiel ist am Ausgang der Abströmkammer 9 ein Rückschlagventil 11 angeordnet. Der Ventilkörper 12 des Rückschlagventils 11 ist in Anströmrichtung 5 längs beweglich angeordnet und stützt sich über eine Rückschlagfeder an einem Stützring 13 ab. Der Stützring 13 ist an dem Ventilgehäuse 4 gehalten.

Die Wand der Abströmkammer 9, welche den Ventilsitz 7 ausbildet, trennt die Abströmkammer 9 von einer ringförmigen Anströmkammer 14, die ständig mit dem Einlass 2 verbunden ist. Auf der dem Ventilgehäuse 4 gegenüberliegenden Seite der Ventilmembran 8 liegt ein Ventilkolben 15 an, welcher längs beweglich in einem Zylindergehäuse 16 geführt ist. Das Zylindergehäuse 16 ist als Flansch ausgeführt und unter Einspannung der Ränder der Ventilmembran 8 mittels Schrauben an dem Ventilgehäuse 4 befestigt. Das Zylindergehäuse 16 ist somit leicht zugänglich und kann im Bedarfsfall leicht von dem Ventilgehäuse 4 gelöst und wieder angebracht werden. Im Innenraum des Zylindergehäuses 16 ist eine Ventilfeder 17 angeordnet, welche als Schraubenfeder ausgebildet ist und auf den Kolbenboden 18 des Ventilkolbens 15 wirkt. Die Ventilfeder 17 ist an einer Stellschraube 19 abgestützt, welche am freien Ende in das Zylindergehäuse 16 eingeschraubt ist und je nach Einschraubtiefe die Vorspannkraft der Ventilfeder 17 bestimmt.

Im Inneren des Ventilkolbens 15 ist ein Druckausgleichsraum 20 ausgebildet, der über eine Druckausgleichsbohrung 21 im Kolbenboden 18 und eine zentrale Öffnung 22 in der Ventilmembran 8 mit der Abströmkammer 9 fluidisch verbunden ist.

Die Anströmkammer 14 ist ständig mit dem Einlass 2 verbunden, so dass der im Einlass 2 herrschende Druck über eine ringförmige erste Wirkfläche 23 auf die Ventilmembran 8 wirkt. Der Kolbenboden 18 des Ventilkolbens 15 reicht radial in den Bereich der Anströmkammer 14, so dass eine sichere Kraftübertragung auf den Ventilkolben 15 gewährleistet ist. Die Anströmkammer 14 ist im gezeigten Ausführungsbeispiel in mehreren konzentrischen Nuten ausgestaltet, die untereinander fluidisch verbunden sind. Auf diese Weise ist sichergestellt, dass die flexible Ventilmembran 8 leicht von ihrer Auflagefläche am Ventilgehäuse 4 abheben kann.

Der Druck in der Abströmkammer 9 wirkt über eine zweite Wirkfläche 24 auf die Ventilmembran 8. Im gezeigten Ausführungsbeispiel ist der Rand 10 der Abströmkammer 9 gerundet ausgebildet, so dass die Ventilmembran 8 punktuell aufliegt und so der Durchmesser der zylindrischen Abströmkammer 9 die zweite Wirkfläche 24 genau definiert. In der gezeigten Schließstellung erzeugt der Druck in der Abströmkammer 9 eine resultierende Kraft über die zweite Wirkfläche 24, welche in gleicher Wirkrichtung auf die Ventilmembran wirkt wie der Druck im Einlass 2 über die erste Wirkfläche 23. Die resultierende Kraft auf den Ventilkolben über die zweite Wirkfläche 24 wird aufgehoben durch eine entgegenstehende Kraft, die im Druckausgleichsraum 20 erzeugt wird. Dazu ist an dem Ventilkolben 15 eine Ausgleichswirkfläche 25 ausgebildet, über die der Druck des Druckausgleichsraums 20 und damit der fluidisch kommunizierenden Abströmkammer 9 unmittelbar auf den Ventilkolben 15 wirken kann. Ein vollständiger Kraftausgleich wird dadurch erreicht, dass der Durchmesser der Ausgleichswirkfläche 25 und der zweiten Wirkfläche 24, die durch den Ventilsitz 7 bestimmt ist, gleich sind. Die Ausgleichswirkfläche 25 wird definiert durch einen an der Stellschraube 19 ausgeformten Führungskolben 26, der in den Druckausgleichsraum 20 einragt. Der Führungskolben 26 ist mit einer Dichtung 27 gegenüber der Wand 28 des Druckausgleichsraums 20 abgedichtet. Der Durchmesser des Druckausgleichsraums 20 im Bereich der Dichtung 27 bestimmt dabei die Größe der Ausgleichswirkfläche 25.

Die Größen der Ausgleichswirkfläche 25 und der dem Ventilsitz 7 zugeordneten zweiten Wirkfläche 24 sind gleich, so dass im geschlossenen Zustand des Überströmventils 1 der aufgrund Druckausgleichs gleiche Druck entsprechend gleiche resultierende Druckkräfte auf den Ventilkolben erzeugt. Die resultierenden Druckkräfte heben sich gegenseitig auf. Unabhängig vom Druck in der Abströmkammer 9 hängt damit das Öffnen des Überströmventils 1 allein vom Druck im Einlass 2 ab. Bei Erreichen des durch die Ventilfeder 17 und die Stellschraube 19 einstellbaren Öffnungsdrucks hebt die Ventilmembran 8 gegen die Rückstellkraft des Ventilkolbens 15 von dem Ventilsitz 7 ab und gibt die Strömungsverbindung vom Einlass 2 zum Auslass 3 frei.

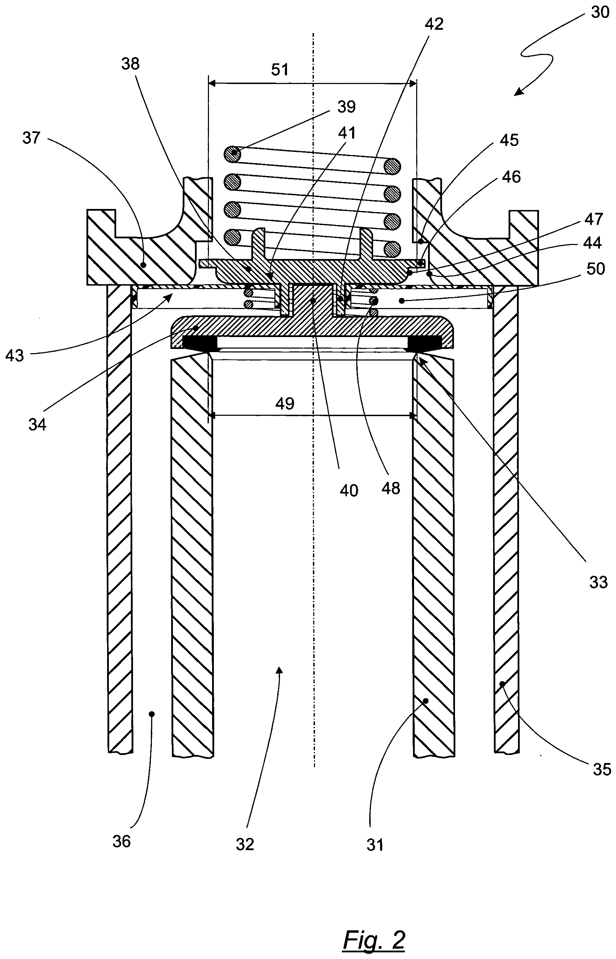

Fig. 2 zeigt ein Überströmventil 30 in Tellerbauweise, wobei ein Einlassrohr 31 den Einlass 32 des Überströmventils 30 bildet. Am freien Ende des Einlassrohrs 31 bildet der umlaufende Rand des Einlassrohrs 31 den Ventilsitz 33 des Ventils, auf dem ein Ventilteller 34 dichtend aufliegt. Das Einlassrohr 31 ist innerhalb eines Ventilgehäuses 35 etwa konzentrisch aufgenommen, so dass zwischen dem Ventilgehäuse 35 und dem Einlassrohr 31 ein etwa ringförmiger Auslass 36 gebildet ist.

Das Ventilgehäuse 35 ist an seinem offenen Ende, d.h. im Bereich des Ventiltellers 34, von einem Zylindergehäuse 37 verschlossen, in dem ein Ventilkolben 38 längs beweglich geführt ist. Der Ventilkolben 38 wird innerhalb des Zylindergehäuses 37 von einer als Schraubenfeder ausgeführten Ventilfeder 39 beaufschlagt. Die Ventilfeder 39 stützt sich an einer hier nicht dargestellten Stellschraube ab, welche in das Zylindergehäuse 37 eingeschraubt ist und mit seiner Schraubstellung die Rückstellkraft der Ventilfeder 39 einstellt.

Der Ventilteller 34 ist mit einem Stößel 40 ausgestattet, welcher auf den Kolbenboden 41 des Ventilkolbens 38 wirkt. Der Stößel 40 des Ventiltellers 34 ist in einer am Kolbenboden 41 ausgebildeten Führung 42 längs geführt, so dass ausschließlich in Öffnungsrichtung des Ventiltellers wirkende Kräfte vom Ventilteller 34 auf den Ventilkolben 38 übertragbar sind.

An dem Kolbenboden 41 des Ventilkolbens 38 liegt eine flexible und mit dem Ventilkolben 38 bewegliche Membran 43 an. Die Membran 43 erstreckt sich radial über den Ventilkolben 38 hinaus und reicht über eine Innenwand 44 des Zylindergehäuses 37 hinaus. Die Membran 43 erstreckt sich im gezeigten Ausführungsbeispiel im Wesentlichen parallel zu der Ebene einer Stirnwand, mit der das Zylindergehäuse 37 auf dem Ventilgehäuse 35 aufliegt und reicht bis zum Ventilgehäuse 35. Die Membran 43 kann zwischen dem Ventilgehäuse 35 und dem Zylindergehäuse 37 eingespannt sein.

Der Hubweg des Ventilkolbens 38 ist durch eine Schulter 45 begrenzt, die an der Innenseite des Zylindergehäuses 37 ausgebildet ist. In dem durch die Schulter 45 festgelegten Hubraum ist der Ventilkolben 38 mit einem Kolbenrand 46 beweglich, der über den Kolbendurchmesser im Bereich seines Mantels 47 bis nahe der Innenwand 44 des Zylindergehäuses 37 nach außen geführt ist.

Zwischen dem Kolbenboden 41 des Ventilkolbens 38 und dem Ventilteller 34 ist eine Schraubenfeder 48 angeordnet, welche sich in gezeigtem Ausführungsbeispiel an der Membran 43 abstützt. Die Schraubenfeder 48 wirkt als Druckfeder. Die Federkraft der Schraubenfeder 48 ist geringer als die Federkraft der Ventilfeder 39. Durch die Schraubenfeder 48 wirkt der Ventilteller 34 mit seinem Ventilsitz 33 als Rückschlagventil und sorgt dafür, dass auch bei eingefedertem Ventilkolben 38 und Überdruck im Auslass 36 das Überströmventil 30 geschlossen wird.

Der Druck im Einlass 32 wirkt auf den Ventilteller 34 über eine erste Wirkfläche 49, die durch den Ventilsitz 33 bestimmt ist. Die Membran 43, die am Ventilkolben 38 anliegt, begrenzt zwischen dem Kolbenboden 41 und dem Ventilteller 34 einen Druckausgleichsraum 50. Der Druck im Druckausgleichsraum 50 wirkt auf den Ventilkolben 38 über eine Ausgleichswirkfläche 51, welche durch die wirksame Fläche der Membran 43 definiert ist. Der Durchmesser der Ausgleichswirkfläche 51 entspricht etwa dem Mittelwert eines Durchmessers der Innenwand 44 des Zylindergehäuses 37 und dem Durchmesser des Mantels 47 des Ventilkolbens 38. Der Kolbendurchmesser im Bereich des Mantels 47 bestimmt die Anlagefläche der Membran 43 am Ventilkolben 38.

Über die Ausgleichswirkfläche 51 wirkt der Luftdruck unmittelbar und unabhängig vom Ventilteller 34 am Ventilkolben 38. Die Ausgleichswirkfläche 51 und die erste Wirkfläche 49 sind gleich groß. Da im Ausführungsbeispiel sowohl die Ausgleichswirkfläche 51 als auch die erste Wirkfläche 49 kreisrund ausgebildet sind, ergibt sich die gleiche Größe der Flächen aus einer Gestaltung mit gleichen Durchmessern. Durch die gleiche Größe der ersten Wirkfläche 49 und der Ausgleichswirkfläche 51 wird ein Sprung der Wirkfläche für den Einlassdruck beim Öffnen des Ventils vermieden, so dass der Öffnungs- bzw. Schließvorgang des Ventils ausschließlich von der Höhe des Druckniveaus im Einlass 32 abhängig ist. Einem frühzeitigen Öffnen des Überströmventils 30 aufgrund Drucks auf eine dem Auslass 36 zugeordnete zweite Wirkfläche ist entgegen gewirkt, da der Ventilteller 34 in dem gezeigten Ausführungsbeispiel gegen die Kraft des Drucks im Auslass 36 öffnet.

Über die Einstellung der Rückstellkraft der Ventilfeder 39 wird der Öffnungsdruck des Ventils 30 eingestellt, unterhalb dem der Ventilkolben 38 den Ventilteller 34 an den Ventilsitz 33 drängt und das Ventil 30 geschlossen hält. Sobald der Druck im Einlass 32 über die erste Wirkfläche 49 eine Kraft generiert, welche die Rückstellkräfte auf den Ventilteller 34 überwindet, hebt der Ventilteller 34 vom Ventilsitz 33 ab und gibt die Strömungsverbindung zwischen Einlass 32 und Auslass 36 frei. Hebt der Ventilteller 34 vom Ventilsitz 33 ab, so steigt der Druck im Druckausgleichsraum 50 sofort auf das Niveau des Drucks im Einlass 32.

## Patentansprüche

1. Überströmventil für Drucklufteinrichtungen, mit einem Einlass (2) und einem Auslass (3) für Druckluft, mit einem Ventilglied (8), das in Schließstellung des Überströmventils (1) dichtend auf einem Ventilsitz (7) aufliegt, der durch einen umlaufenden Rand (10) gebildet ist, wobei das Ventilglied (8) gegen die Rückstellkraft eines längsbeweglichen Ventilkolbens (15), der von einer Ventilfeder (17) beaufschlagt ist, unter der Wirkung des Drucks auf eine dem Einlass (2) zugeordnete erste Wirkfläche (23) und des Drucks auf eine dem Auslass (3) zugeordnete zweite Wirkfläche (24) von dem Ventilsitz (7) abhebbar ist, wobei das Ventilglied als flexible Ventilmembran (8) ausgebildet, an welcher der Ventilkolben (15) auf der dem Ventilsitz (7) abgewandten Seite anliegt,
wobei eine Wand der Abströmkammer (9) den Ventilsitz (7) ausbildet und die Abströmkammer (9) von einer dem Einlass (2) des Überströmventils (1) zugeordneten Anströmkammer (14) trennt,
**dadurch gekennzeichnet, dass** auf der dem Ventilkolben (15) zugewandten Seite des Ventilglieds (8) ein mit dem Auslass (3) fluidisch kommunizierender Druckausgleichsraum (20) vorgesehen ist, in welchem der Luftdruck über eine Ausgleichswirkfläche (25) am Ventilkolben (15) unmittelbar auf den Ventilkolben (15) wirkt, wobei der Druckausgleichsraum (20) im Inneren des Ventilkolbens (15) ausgebildet ist und über eine Drucksausgleichsbohrung (21) im Ventilkolben (15) und eine Öffnung (22) in der Ventilmembran (8) mit einer dem Auslass (3) zugeordneten Abströmkammer (9) kommuniziert, wobei der Ventilkolben (15) in einem Zylindergehäuse (16) angeordnet ist und die Ventilfeder (17) sich an einer in das Zylindergehäuse (16) eingeschraubten Stellschraube (19) abstützt, wobei der Ventilkolben (15) radial über den Ventilsitz (7) hinausreicht, wobei an der Stellschraube (19) ein in den Druckausgleichsraum (20) einragender Führungskolben (26) angeordnet ist, wobei die Ausgleichswirkfläche (25) definiert wird durch den an der Stellschraube (19) ausgeformten Führungskolben (26), der in den Druckausgleichsraum (20) einragt, wobei der Führungskolben (26) mit einer Dichtung (27) gegenüber der Wand (28) des Druckausgleichsraums (20) abgedichtet ist.

2. Überströmventil nach Anspruch 1, **dadurch gekennzeichnet, dass** die Ausgleichswirkfläche (25) gleich groß ist wie diejenige der ersten Wirkfläche (23) oder der zweiten Wirkfläche (24), welche durch den Ventilsitz (7) bestimmt ist.

3. Drucklufteinrichtung für Kraftfahrzeuge, mit einer Druckluftleitung, an die ein Druckluftspeicher zur Versorgung von Verbrauchereinheiten anschließbar ist, **dadurch gekennzeichnet, dass** in der Druckleitung oder in einer oder mehreren Leitungen zu den Verbrauchereinheiten ein Überströmventil (1) nach einem der Ansprüche 1 bis 2 angeordnet ist.

## Claims

1. Overflow valve for compressed air devices, with an inlet (2) and an outlet (3) for compressed air, with a valve element (8) which bears, in the closed position of the overflow valve (1), in a seal-forming fashion on a valve seat (7) which is formed by a peripheral edge (10), wherein the valve element (8) can be lifted off from the valve seat (7) counter to the restoring force of a longitudinally movable valve piston (15) which is acted on by a valve spring (17), under the effect of the pressure acting on a first operative face (23) assigned to the inlet (2) and the pressure acting on a second operative face (24) assigned to the outlet (3), wherein the valve element is embodied as a flexible valve diaphragm (8) on which the valve piston (15) bears on the side facing away from the valve seat (7),
wherein one wall of the outflow chamber (9) forms the valve seat (7) and separates the outflow chamber (9) from an inflow chamber (14) which is assigned to the inlet (2) of the overflow valve (1),
**characterized in that** a pressure equalization space (20) which communicates fluidically with the outlet (3) is provided on the side of the valve element (8) facing the valve piston (15), in which pressure equalization space (20) the air pressure acts directly on the valve piston (15) via an equalization operative face (25) on the valve piston (15), wherein the pressure equalization space (20) is formed in the interior of the valve piston (15) and communicates, via a pressure equalization borehole (21) in the valve piston (15) and an opening (22) in the valve diaphragm (8), with an outflow chamber (9) which is assigned to the outlet (3), wherein the valve piston (15) is arranged in a cylinder housing (16), and the valve spring (17) is supported on an adjusting screw (19) which is screwed into the cylinder housing (16),
wherein the valve piston (15) extends radially over the valve seat (7), wherein a guide piston (26) which projects into the pressure equalization space (20) is arranged on the adjusting screw (19), wherein the equalization operative face (25) is defined by the guide piston (26) which is formed on the adjusting screw (19) and projects into the pressure equalization space (20), wherein the guide piston (26) is sealed with respect to the wall (28) of the pressure equalization space (20) by means of a seal (27).

2. Overflow valve according to Claim 1, **characterized in that** the equalization operative face (25) is equal in size to that of the first operative face (23) or of the second operative face (24) which is determined by the valve seat (7).

3. Compressed air device for motor vehicles, with a compressed air line to which a compressed air accumulator for supplying consumer units can be connected, **characterized in that** an overflow valve (1) according to one of Claims 1 to 2 is arranged in the pressure line or in one or more lines leading to the consumer units.

## Revendications

1. Soupape de décharge de pression pour des dispositifs à air comprimé, comprenant une entrée (2) et une sortie (3) pour l'air comprimé, un organe de soupape (8) qui, dans la position de fermeture de la soupape de décharge de pression (1), s'applique hermétiquement sur un siège de soupape (7) qui est formé par un bord périphérique (10), l'organe de soupape (8) pouvant être soulevé du siège de soupape (7) à l'encontre de la force de rappel d'un piston de soupape déplaçable longitudinalement (15) qui est sollicité par un ressort de soupape (17) sous l'effet de la pression exercée sur une première surface active (23) associée à l'entrée (2) et de la pression exercée sur une deuxième surface active (24) associée à la sortie (3), l'organe de soupape étant réalisé sous forme de membrane de soupape flexible (8) contre laquelle le piston de soupape (15) s'applique du côté opposé au siège de soupape (7),
une paroi de la chambre d'écoulement (9) constituant le siège de soupape (7) et séparant la chambre d'écoulement (9) d'une chambre d'afflux (14) associée à l'entrée (2) de la soupape de décharge de pression (1),
**caractérisée en ce que** du côté de l'organe de soupape (8) tourné vers le piston de soupape (15) est prévu un espace d'équilibrage de pression (20) communiquant fluidiquement avec la sortie (3), dans lequel la pression d'air agit directement sur le piston de soupape (15) par le biais d'une surface active d'équilibrage (25) au niveau du piston de soupape (15), l'espace d'équilibrage de pression (20) étant réalisé à l'intérieur du piston de soupape (15) et communiquant par le biais d'un alésage d'équilibrage de pression (21) dans le piston de soupape (15) et d'une ouverture (22) dans la membrane de soupape (8) avec une chambre d'écoulement (9) associée à la sortie (3), le piston de soupape (15) étant disposé dans un boîtier cylindrique (16) et le ressort de soupape (17) s'appuyant contre une vis de réglage (19) vissée dans le boîtier cylindrique (16),
le piston de soupape (15) s'étendant radialement au-delà du siège de soupape (7), un piston de guidage (26) pénétrant dans l'espace d'équilibrage de pression (20) étant disposé au niveau de la vis de réglage (19), la surface active d'équilibrage (25) étant définie par le piston de guidage (26) formé sur la vis de réglage (19), lequel pénètre dans l'espace d'équilibrage de pression (20), le piston de guidage (26) étant étanchéifié vis-à-vis de la paroi (28) de l'espace d'équilibrage de pression (20) par le biais d'un joint d'étanchéité (27) .

2. Soupape de décharge de pression selon la revendication 1, **caractérisée en ce que** la surface active d'équilibrage (25) est aussi grande que celle de la première surface active (23) ou de la deuxième surface active (24), laquelle est définie par le siège de soupape (7).

3. Dispositif à air comprimé pour véhicules automobiles, comprenant une conduite d'air comprimé à laquelle peut être raccordé un accumulateur d'air comprimé pour l'alimentation d'unités consommatrices, **caractérisé en ce que** dans la conduite de pression ou dans une ou plusieurs conduites allant aux unités consommatrices est disposée une soupape de décharge de pression (1) selon l'une quelconque des revendications 1 et 2.
